# EUROPEAN PATENT SPECIFICATION

(11) **EP 3 372 390 B1**
(45) Date of publication and mention of the grant of the patent: **10.11.2021**
(21) Application number: 17400013.3
(22) Date of filing: 09.03.2017
(51) Int. Cl.: B29C 73/02, B29C 73/06, F16B 5/01, B29C 73/26, B29L 7/00, B29L 31/60

(54) **A METHOD OF REPAIRING A SANDWICH COMPONENT HAVING A CORE ELEMENT THAT IS ARRANGED BETWEEN A FIRST AND A SECOND COVER PLATE**
VERFAHREN ZUR REPARATUR EINER SANDWICHKOMPONENTE MIT EINEM ZWISCHEN EINER ERSTEN UND EINER ZWEITEN ABDECKPLATTE ANGEORDNETEN KERNELEMENT
PROCÉDÉ DE RÉPARATION D'UN COMPOSANT EN SANDWICH AYANT UN ÉLÉMENT DE NOYAU DISPOSÉ ENTRE UNE PREMIÈRE ET UNE SECONDE PLAQUE DE RECOUVREMENT

(43) Date of publication of application: 12.09.2018
(73) Proprietor: AIRBUS HELICOPTERS DEUTSCHLAND GmbH, 86609 Donauwörth (DE)
(72) Inventor: Uzun, Ugur, 86655 Harburg (DE); Bratz, Kurt, 85737 Ismaning (DE)
(74) Representative: GPI & Associés

(56) References cited:
- EP-A1- 2 125 347
- WO-A1-2009/141038
- WO-A1-2016/102792
- DE-A1- 2 500 036
- US-A- 3 384 142

## Description

The invention is related to a method of repairing a sandwich component having a core element that is arranged between a first cover plate and a second cover plate.

In the field of aviation, weight optimization issues are crucial so that various aircraft components are implemented in sandwich construction in order to reduce their weight. Such components are generally referred to as "sandwich components" and may be comprised of plural differing materials, each having associated characteristics and advantages. By combining these plural differing materials into a single sandwich component, the latter can be provided at least to some extent with the characteristics and advantages of all combined materials.

By way of example, a suitable sandwich component can be used to implement a cabin floor of a helicopter, which is mounted to the helicopter's fuselage via frames and stringers thereof. Such a cabin floor may e. g. comprise a core element with an associated core height that is arranged between an upper cover plate and a lower cover plate, wherein at least the lower cover plate is attached to the fuselage. The core element can e. g. be implemented as a honeycomb core or a foam core and is usually implemented as lightweight as possible in order to reduce the overall weight of the cabin floor.

In such a configuration, the cabin floor has a predefined thickness that is at least essentially determined by the associated core height of the core element in order to provide the cabin floor with a required bearing strength and stiffness. More specifically, the cabin floor is generally embodied such that it exhibits a comparatively great area moment of inertia and, thus, a comparatively high flexural rigidity, wherein the core element is adapted to provide required shear rigidity in order to prevent formation of bumps and wrinkles in the upper and lower cover plates.

In operation, an excessive use of the helicopter and, more specifically, of its cabin floor can lead to damages of the cabin floor that need to be repaired in order to guarantee a reliable and secure continued utilization of the helicopter. Such damages usually exhibit a cover plate crack of the upper cover plate of the sandwich component that implements the cabin floor, as well as a deterioration of the core element adjacent to the cover plate crack, which together define a damaged area of the sandwich component. This damaged area is preferably repaired starting from the upper cover plate side of the sandwich component that implements the cabin floor, so that a preliminary removal of the cabin floor from the helicopter for accessing the lower cover plate side of the sandwich component is not required.

In order to repair such a damaged area starting from the upper cover plate side, the damaged area is usually extensively drilled out, whereby a large-scale hole is created in the upper cover plate around the cover plate crack and also in the core element, such that the deteriorated part of the core element is removed. The region of the removed deteriorated part is then filled with a suitable doubler patch and additional filling material and, then, the upper cover plate is reconstructed by means of a suitable repair patch and/or an associated doubler patch.

The document EP 2 108 504 B1 describes a repair method for repairing a sandwich component using a suitable doubler patch and additional filling material. The doubler patch is introduced into the region of the removed deteriorated part starting from an open lateral side of the sandwich component and, subsequently, glued to the upper cover plate such that the region of the removed deteriorated part is closed in the direction of the upper cover plate. Then, a suitable filling material is introduced into the core element to fill the region of the removed deteriorated part, i. e. to fill space and gaps between the core element and the doubler patch in the region of the removed deteriorated part.

However, for enabling a required mechanical connection between the filling material and the upper cover plate, which is required to enable a required flux of force from the filling material to the upper cover plate and, consequently, a transmission of respective shear loads, some under-cut area needs to be provided below the upper cover plate. Such a provision of under-cut area enables implementation of an overlapping area between the upper cover plate and the filling material. This overlapping area is usually created by further enlarging the region of the removed deteriorated part in the core element, e. g. by means of milling, so that a repair cavity having a greater diameter than the area that is drilled out in the upper cover plate is created.

If, however, the diameter of the repair cavity is not sufficiently great, e. g. if it is only selected slightly greater than the area that is drilled out in the upper cover plate, a resulting under-cut resp. overlapping area may be too small. This may, in turn, lead to an insufficient connection between the filling material and the upper cover plate, which may result in stress peaks that negatively impact the connection as such.

The document WO 2009/141038 A1 describes an alternative repair method for repairing a sandwich component having an associated core element using a mounting sleeve with a plurality of peripheral openings. The mounting sleeve is introduced via a repair opening created in an upper cover plate of the sandwich component into a repair cavity created in the associated core element of the sandwich component. The repair cavity and the repair opening are provided with identical diameters. Then, a fluid adhesive is introduced into the mounting sleeve and via the plurality of peripheral openings into the core element such that a hole free of adhesive is formed in the mounting sleeve, wherein a screw can be threaded in.

However, while the mounting sleeve allows to repair a sandwich component, use thereof may not be allowed if its edges are damaged or reaming to deep and installing a false edge, because of an underlying specification of the sandwich component. Moreover, there is no predefined under-cut area provided below the upper cover plate of the sandwich component that defines a required overlapping area between the adhesive and the upper cover plate. Thus, as explained above, this may lead to an insufficient connection between the adhesive and the upper cover plate, which may result in stress peaks that negatively impact the connection as such. Furthermore, the hole in the mounting sleeve that remains free of adhesive must be closed using a screw, which requires not only an additional component, but also an additional process step that must be executed when hardening of the adhesive is finished.

It is, therefore, an object of the present invention to provide a new method of repairing a sandwich component, which overcomes the above described drawbacks and which allows to repair the sandwich component using a mounting sleeve that can be securely and reliably connected to the sandwich component using a fluid adhesive.

This object is solved by a method of repairing a sandwich component with the features of claim 1. More specifically, according to the invention a method of repairing a sandwich component having a core element that is arranged between a first cover plate and a second cover plate is provided. The method comprises at least the steps of: Creating a repair opening in the first cover plate, creating a repair cavity in the core element in prolongation to the repair opening, introducing a dowel sleeve into the repair cavity, introducing an insert into the dowel sleeve, and introducing a fluid adhesive into the dowel sleeve and the repair cavity. More specifically, the repair opening in the first cover plate is created with an associated opening diameter. The repair cavity is created in the core element in prolongation to the repair opening and with a cavity diameter that is greater than the associated opening diameter of the repair opening for providing lateral under-cut areas that are covered by the first cover plate. The dowel sleeve is introduced through the repair opening into the repair cavity. Preferably, the dowel sleeve is provided with a plurality of peripheral openings and has an outer diameter that equals at least approximately the associated opening diameter of the repair opening, such that an outer form-fit and/or press-fit connection is created between the dowel sleeve and the first cover plate. Furthermore, the insert is introduced into the dowel sleeve, such that an inner form-fit and/or press-fit connection is created between the insert and the dowel sleeve. The fluid adhesive is introduced into the dowel sleeve and the repair cavity such that the lateral under-cut areas and the plurality of peripheral openings are filled with the fluid adhesive.

According to one aspect, the first and second cover plates of the sandwich component comprises aluminium and/or a fiber reinforced polymer, such as a carbon fiber reinforced polymer or a glass fiber reinforced polymer. The core element may e. g. comprise a honeycomb core and/or a foam core.

Advantageously, the outer form-fit and/or press-fit connection between the dowel sleeve and the first cover plate allows an easy and stable fixation of the dowel sleeve in the sandwich component and, thus, simplifies connection of the dowel sleeve to the first cover plate. Furthermore, provision of the lateral under-cut areas below the first cover plate enables provision of required overlapping areas between the fluid adhesive and the first cover plate, so that an even and uniform distribution of the fluid adhesive in the repair cavity is enabled. Thus, the connection of the dowel sleeve to the first cover plate is strengthened such that the above-mentioned stress peaks can efficiently be prevented.

According to one aspect, the plurality of peripheral openings provided in the dowel sleeve enables the fluid adhesive to flow into the repair cavity and, hence, into the lateral under-cut areas, so that a form-fit connection between the dowel sleeve and the core element is created. Thus, a comparatively high load transmission from the dowel sleeve into the core element structure, especially in pulling direction of the dowel sleeve away from the sandwich component, is enabled. Also, transfer of comparatively high lateral forces by the dowel sleeve into the sandwich component is improved. This is advantageous e. g. in cases, where the sandwich component is used to implement a cabin floor of a helicopter.

Important advantages of the dowel sleeve that is used in the inventive method of repairing a sandwich component consist in a flexible adaptation to a respective type of damage of the sandwich component, a required load transmission and/or interchangeability of applicable inserts that can be introduced into the dowel sleeve. Furthermore, the plurality of peripheral openings of the dowel sleeve and/or one or more flanges provided with the dowel sleeve are adaptable to respective manufacturing environments and possibilities. Advantageously, the following constructive elements of the dowel sleeve are adaptable:
- dowel sleeve wall thickness, with a minimum of 0.25mm;
- flange wall thickness, with a minimum that corresponds to a respective thickness of the first cover plate and a maximum that corresponds to a respective thickness of an associated insert flange;
- length of the flange, with a minimum of 5mm plus a respective flange wall thickness;
- number of peripheral openings of the dowel sleeve, with a minimum of four peripheral openings, but otherwise depending on formation and forces that have to be transferred into the core element structure:
   - if tensile forces must be transferred, as many peripheral openings as possible are preferred, preferentially with a minimum angular distance between adjacent peripheral openings - seen in circumferential direction of the dowel sleeve - of 45°, and
   - if lateral forces must be transferred, already a small number of peripheral openings with an edge distance of 2 d_{PODS} (d_{PODS} = diameter of peripheral opening of dowel sleeve) appears to be sufficient;
- edge distance of peripheral openings of the dowel sleeve, with a minimum of 1 d_{PODS};
- distance between adjacent peripheral openings of the dowel sleeve - seen in circumferential direction of the dowel sleeve -, with a minimum of 1 d_{PODS};
- location of the peripheral openings in the dowel sleeve, preferably symmetrically (e. g. all at an angular distance between adjacent peripheral openings - seen in circumferential direction of the dowel sleeve - of e. g. 120°, 90° or 45°);
- formation of the peripheral openings of the dowel sleeve, e. g. in the form of circular boreholes or as long slots, wherein long slots are possible in vertical and horizontal direction of the dowel sleeve, and wherein an underlying distance between long slots in circumferential direction of the dowel sleeve preferably amounts at least to 1 d_{PODS};
- selected material of the dowel sleeve, preferably stainless steel LN668 1.4545.3, but other materials are likewise contemplated, such as carbon fiber reinforced polymer, glass fiber reinforced polymer, aluminium etc.

Advantageously, use of the insert allows in particular circumstances to replace subsequently only the insert, if required. For instance, if the insert is damaged during handling, e. g. during drilling, or afterwards during use of the sandwich component, e. g. because of corrosion, only the insert needs to be replaced without requiring replacement of the dowel sleeve. In this case, simply an adhesive must be used that is compatible with the fluid adhesive that is used during mounting of the dowel sleeve and the insert.

By way of example, a given insert may be implemented as a through-hole-insert or a blind-hole-insert. However, other configurations as well as other insertable components are likewise contemplated.

According to a further preferred embodiment, the step of introducing the insert into the dowel sleeve is performed prior to the step of introducing the dowel sleeve into the repair cavity.

Advantageously, by inserting the insert into the dowel sleeve prior to introducing the dowel sleeve into the repair cavity, the need for a subsequent process step after having introduced the fluid adhesive into the dowel sleeve and the repair cavity is eliminated. Thus, a separate adhesive joint for fixing the insert in the dowel sleeve is not required, so that an eventual subsequent splitting or cracking of such a separate adhesive joint may not occur. As a result, an improved load transmission can be achieved.

According to a further preferred embodiment, the insert comprises at least one flange having an outer diameter that is predefined such that the inner form-fit and/or press-fit connection is created between the at least one flange and the dowel sleeve.

According to a further preferred embodiment, the at least one flange is provided with a potting hole and a ventilation hole, wherein the step of introducing the fluid adhesive into the dowel sleeve and the repair cavity comprises introducing the fluid adhesive via the potting hole into the dowel sleeve.

Advantageously, only two holes are required for permitting introduction of the fluid adhesive into the dowel sleeve and the repair cavity: the potting hole is adapted for injection of the fluid adhesive into the dowel sleeve and the repair cavity, and the ventilation hole is adapted for allowing exhaust of air from the dowel sleeve and the repair cavity during the injection. However, if required e. g. for complex core element structures, one or more additional ventilation holes can be provided.

Furthermore, as the potting hole and the ventilation hole are preferably provided as integral part of the insert, the dowel sleeve as such does not need to exhibit respective potting and/or ventilation holes. Thus, a simple and robust dowel sleeve can advantageously be provided.

According to a further preferred embodiment, the insert comprises a column section that extends from the at least one flange into the dowel sleeve, the column section having an outer diameter that is smaller than the outer diameter of the at least one flange, such that an inner free space is provided between the column section and the dowel sleeve, wherein the step of introducing the fluid adhesive into the dowel sleeve and the repair cavity comprises introducing the fluid adhesive via the potting hole into the inner free space, such that the fluid adhesive flows from the inner free space via the plurality of peripheral openings into the lateral under-cut areas.

According to a further preferred embodiment, the dowel sleeve comprises at least one radially inwardly protruding flange that is predefined such that the inner form-fit and/or press-fit connection is created between the at least one radially inwardly protruding flange of the dowel sleeve and the at least one flange of the insert.

Advantageously, by using a dowel sleeve with flange, it is possible to repair cut-offs with an extension of up to 50mm in a given sandwich component. Furthermore, by using the dowel sleeve with flange, an underlying interchangeability is increased, as e. g. a damaged insert arranged therein can be changed multiple times, if necessary.

According to a further preferred embodiment, the method further comprises the step of creating an additional repair opening in the second cover plate, the additional repair opening having an associated opening diameter that corresponds to the associated opening diameter of the repair opening, wherein the repair cavity is created such that it extends from the repair opening to the additional repair opening.

According to a further preferred embodiment, the step of introducing the dowel sleeve through the repair opening into the repair cavity comprises introducing the dowel sleeve such that an additional outer form-fit and/or press-fit connection is created between the dowel sleeve and the second cover plate.

According to a further preferred embodiment, the method further comprises the step of attaching, prior to introducing the fluid adhesive, a fixation disc to the first cover plate for fixing the dowel sleeve in the sandwich component at the first cover plate.

According to a further preferred embodiment, the method further comprises the step of attaching, prior to introducing the fluid adhesive, a fixation tape to the second cover plate for fixing the dowel sleeve in the sandwich component at the second cover plate.

According to a further preferred embodiment, the dowel sleeve comprises at least one flange, wherein the step of introducing the dowel sleeve through the repair opening into the repair cavity comprises bonding the at least one flange to the second cover plate.

Advantageously, the inventive method of repairing a sandwich component provides a multiplicity of differing repair options for repairing a given sandwich component before it has to be scrapped. For instance, the inventive method can be performed using a dowel sleeve with or without flange, the dowel sleeve can be inserted into a through-hole or a blind-hole, and so on.

Preferably, if interchangeability of the insert is very important, the dowel sleeve with flanges is used. In contrast, a dowel sleeve without flange is preferably used if lateral loads are critical. Furthermore, a bigger wall thickness and/or greater lateral under-cut areas are preferably foreseen if comparatively high load transmissions are envisaged. If, however, only comparatively small loads have to be transferred, the wall thickness can be reduced.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective side view and a perspective exploded view of a sandwich component according to an embodiment of the invention,
- Figure 2 shows a schematic sectional view of the sandwich component of Figure 1 with a dowel sleeve and an insert according to one aspect,
- Figure 3 shows a schematic sectional view of the sandwich component and the insert of Figure 2 with a dowel sleeve according to another aspect,
- Figure 4 shows a schematic sectional view of the sandwich component of Figure 1 with a dowel sleeve and an insert according to still another aspect,
- Figure 5 shows a schematic sectional view of the sandwich component and the insert of Figure 4 with a dowel sleeve according to another aspect,
- Figure 6 shows a schematic sectional view of the sandwich component and the insert of Figure 4 with a dowel sleeve according to still another aspect,
- Figure 7 shows a schematic sectional view of the sandwich component and the insert of Figure 4 with a dowel sleeve according to still another aspect, and
- Figure 8 shows a schematic sectional view of the sandwich component of Figure 1 with the dowel sleeve and the insert of Figure 2 and a fixing disc and a fixation tape according to one aspect,

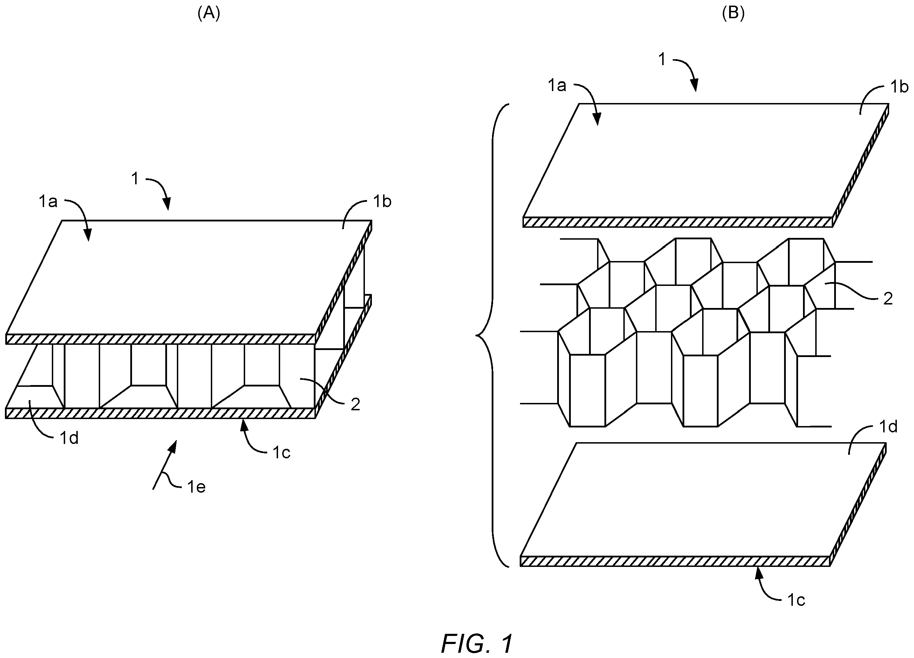

Figure 1 shows a schematic side view and a schematic exploded view of an exemplary sandwich component 1. The side view is designated as part (A) of Figure 1 and the exploded view as part (B) thereof, which is seen in a viewing direction illustrated by an arrow 1e in part (A).

The sandwich component 1 is preferably adapted for implementing a cabin floor of an aircraft and, more specifically, of a rotary wing aircraft, such as a helicopter. However, it should be noted that the present invention is not limited to an application to cabin floors of helicopters, but may likewise be applied generally to sandwich components that are constructed in the manner described below.

According to an aspect, the sandwich component 1 comprises at least a core element 2, which is arranged between a first cover plate 1b and a second cover plate 1d. The core element 2 may be implemented as a honeycomb core, and/or as a foam core. Illustratively, the core element 2 is implemented as a honeycomb core and, therefore, also referred to hereinafter as the "honeycomb core 2", for simplicity and clarity. The honeycomb core may e. g. comprise paper or paperboard that is impregnated with synthetic resin.

It should be noted that the honeycomb core 2 is only illustrated schematically in Figure 1 and the following figures. However, the constitution of such a honeycomb core is well-known to the person skilled in the art, so that a more detailed illustration and description of the honeycomb core 2 can be avoided for simplicity of the drawings and brevity of the description.

The first and second cover plates 1b, 1d may have identical or at least similar, as well as completely different thicknesses, and they may e. g. be implemented using a metal, such as aluminium, and/or a metal alloy, and/or a fiber reinforced polymer, such as a carbon fiber reinforced polymer or a glass fiber reinforced polymer. Illustratively, the first cover plate 1b defines an upper component side 1a and represents, accordingly, an upper cover plate. The second cover plate 1d illustratively defines a lower component side 1c and represents, accordingly, a lower cover plate. Therefore, the first cover plate 1b is also referred to as the "upper cover plate 1b" hereinafter and the second cover plate 1d is also referred to as the "lower cover plate 1d" hereinafter, for clarity and simplicity.

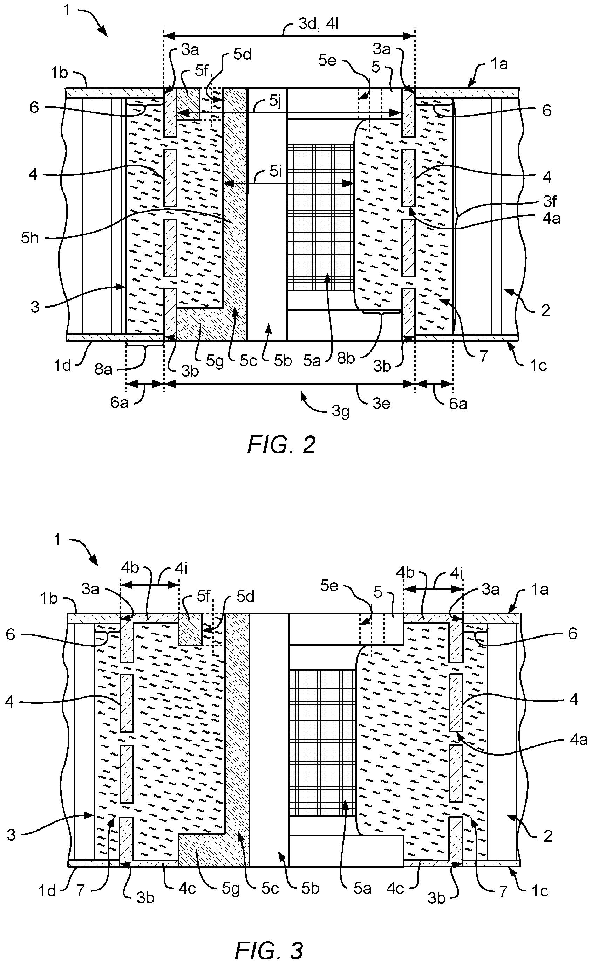

Figure 2 to Figure 8 respectively show the sandwich component 1 of Figure 1 for illustrating different methods of repairing the sandwich component 1 of Figure 1. However, it should be noted that for simplicity and clarity only a small section of the sandwich component 1 of Figure 1 is shown in each one of Figure 2 to Figure 8.

Figure 2 shows the sandwich component 1 of Figure 1 with the upper and lower cover plates 1b, 1d and the honeycomb core 2 for illustrating a method of repairing the sandwich component 1 according to one aspect. The method preferably starts with creating a repair opening 3a in the upper cover plate 1b, e. g. by means of drilling. The repair opening 3a is preferably circular and created such that it exhibits an associated opening diameter 3d that is at least equal to an extension of a damaged area in the sandwich component 1.

Furthermore, an additional repair opening 3b is created in the lower cover plate 1d. The additional repair opening 3b is preferably also circular and created with an associated opening diameter 3e that preferentially corresponds to the associated opening diameter 3d of the repair opening 3a. For simplicity and clarity, the repair opening 3a created in the upper cover plate 1b is hereinafter referred to as the "upper repair opening 3a" and the associated opening diameter 3d of the upper repair opening 3a as the "upper opening diameter 3d". Likewise, the additional repair opening 3b created in the lower cover plate 1d is hereinafter referred to as the "lower repair opening 3b" and the associated opening diameter 3e of the lower repair opening 3b as the "lower opening diameter 3e".

The lower repair opening 3b is e. g. also created by means of drilling. Preferably, the drilling is performed such that the upper cover plate 1b and the lower cover plate 1d are perforated in a single drilling step. More specifically, the drilling is preferably performed with a tolerance of +0.1mm at a drill depth of 3 to 5mm.

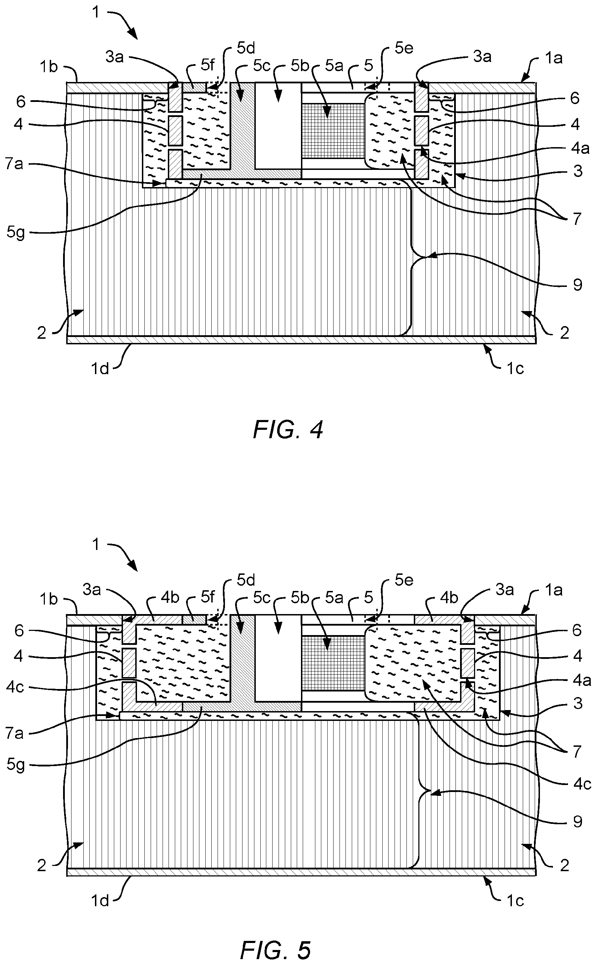

However, it should be noted that creation of the lower repair opening 3b is merely optional and depends on a respectively selected method of repairing the sandwich component 1. In other words, in selected methods of repairing the sandwich component 1, creation of the lower repair opening 3b is omitted, as exemplarily described below with reference to Figure 4 to Figure 7.

Subsequently, a repair cavity 3 is created in the sandwich component 1, preferably by means of milling and/or with a router, e. g. a slot cutter. More specifically, the repair cavity 3 is preferentially circular in cross section and, consequently, created in cylindrical form. Preferably, the repair cavity 3 is created in the sandwich component 1 and, in particular, in the honeycomb core 2 with an associated cavity height 3f such that it extends from the upper cover plate 1b to the lower cover plate 1d, respectively from the upper repair opening 3a to the lower repair opening 3b.

Preferably, the repair cavity 3 is created in the honeycomb core 2 in prolongation to the upper repair opening 3a and with a cavity diameter 3g that is greater than the upper opening diameter 3d. This enables at least provision of lateral under-cut areas 6 that are covered by the upper cover plate 1b. Illustratively, each lateral under-cut area 6 exhibits an associated under-cut area length 6a measured radially outwards from the circumference of the upper repair opening 3a. The associated under-cut area length 6a preferably amounts at least to 7.5mm.

It should be noted that creation of the repair cavity 3 preferably comprises cleaning of the repair cavity 3 and the upper and lower repair openings 3a, 3b. This may be done by any suitable cleaning method, e. g. using oil free pressurized air, acetone and/or methyl ethyl ketone (MEK) as degreasing solvent and/or Korund K120-K180 as abrasive paper. However, as suitable cleaning methods are well-known to the person skilled in the art, they are not described in more detail.

Furthermore, protection measures may be required for protecting the upper and lower cover plates 1b, 1d prior to performing a subsequent process step. For instance, if the upper and lower cover plates 1b, 1d are realized with aluminium, bare aluminium surfaces occurring e. g. in the upper and lower repair openings 3a, 3b must be protected with a suitable corrosion protection, e. g. using an Alodine pen 1132. However, such protection measures are also well-known to the person skilled in the art and, therefore, not described in more detail.

In a subsequent process step, a dowel sleeve 4 that is provided with a plurality of peripheral openings 4a is introduced into the sandwich component 1. Illustratively, the dowel sleeve 4 is provided in the form of a through-dowel sleeve, preferentially with a circular cross section.

Preferably, the dowel sleeve 4 is introduced through the upper repair opening 3a into the repair cavity 3, but may likewise also be introduced via the lower repair opening 3b. Preferentially, the dowel sleeve 4 and the repair cavity 3 are configured such that an outer free space is provided in the repair cavity 3 between the dowel sleeve 4 and the honeycomb core 2. Illustratively, the outer free space is labelled with the reference sign 8a. The outer free space 8a exemplarily defines the lateral under-cut areas 6.

The dowel sleeve 4 preferably exhibits an outer diameter 4l that equals at least approximately the upper opening diameter 3d, such that an outer form-fit and/or press-fit connection is created between the dowel sleeve 4 and the upper cover plate 1b when the dowel sleeve 4 is introduced into the sandwich component 1. Preferably, the outer diameter 4l of the dowel sleeve 4 also equals at least approximately the lower opening diameter 3e, such that an outer form-fit and/or press-fit connection is likewise created between the dowel sleeve 4 and the lower cover plate 1d.

In another process step, an insert 5 is according to one aspect introduced into the dowel sleeve 4 such that an inner form-fit and/or press-fit connection is created between the insert 5 and the dowel sleeve 4. The insert 5 is preferentially a standardized insert, preferably with a circular cross section, which is exemplarily configured as a through-insert, with an inner through hole 5b and a tubular wall 5c. Preferably, the insert 5 is introduced into the dowel sleeve 4 prior to the process step of introducing the dowel sleeve 4 into the repair cavity 3, i. e. into the sandwich component 1.

Furthermore, it should be noted that the dowel sleeve 4 and the insert 5 are preferably cleaned prior to being used in the inventive method of repairing the sandwich component 1. This may also be done by any suitable cleaning method, e. g. using acetone and/or MEK. However, as suitable cleaning methods are well-known to the person skilled in the art, they are not described in more detail.

According to one aspect, the insert 5 comprises at least one flange 5f. By way of example, a first or upper flange 5f and a second or lower flange 5g are illustrated, which are respectively arranged at axial ends of the insert 5 and preferably at least similarly shaped, so that hereinafter only the upper flange 5f is described in more detail representative for both flanges 5f, 5g.

Illustratively, the upper flange 5f is provided with a potting hole 5d and a ventilation hole 5e. The potting hole 5d and the ventilation hole 5e are preferably embodied with an opening diameter of at least 2.5mm. Furthermore, the upper flange 5f has an outer diameter 5j that is predefined such that the inner form-fit and/or press-fit connection between the insert 5 and the dowel sleeve 4 is created between the upper flange 5f and the dowel sleeve 4. Likewise, an inner form-fit and/or press-fit connection may be created between the lower flange 5g and the dowel sleeve 4.

According to one aspect, the insert 5 comprises a column section 5h. Illustratively, the column section 5h extends from the upper flange 5f into the dowel sleeve 4 and exhibits an outer diameter 5i that is smaller than the outer diameter 5j of the upper flange 5f, such that an inner free space is provided between the column section 5h and the dowel sleeve 4. Illustratively, the inner free space is labelled with the reference sign 8b. Preferably, at least the column section 5h is provided with a roughened outer profile 5a.

However, it should be noted that the insert 5, which is exemplarily embodied according to DIN 65187, is merely illustrated by way of example and not for limiting the invention accordingly. Instead, other inserts with another shaping may likewise be used, e. g. inserts according to ASAN 0358 or DIN 65182 etc.

In a subsequent process step, a fluid adhesive 7 is introduced resp. injected into the dowel sleeve 4 and the repair cavity 3, such that the lateral under-cut areas 6 and the plurality of peripheral openings 4a of the dowel sleeve 4 are filled with the fluid adhesive 7. By way of example, EA9396/95 or a mixture of 9396 with 10% micro balloons can be used as the fluid adhesive 7.

Preferably, the fluid adhesive 7 is introduced resp. injected into the dowel sleeve 4 and the repair cavity 3 via the potting hole 5d, such that the inner free space 8b and the outer free space 8a are filled with the fluid adhesive 7 and, consequently, the lateral under-cut areas 6. More specifically, the fluid adhesive 7 is preferably introduced resp. injected via the potting hole 5d into the inner free space 8b, such that the fluid adhesive 7 flows from the inner free space 8b via the plurality of peripheral openings 4a provided in the dowel sleeve 4 into the outer free space 8a and, thus, into the lateral under-cut areas 6.

The injection of the fluid adhesive 7 as such is e. g. performed using a sealant gun with a maximum air pressure of 5bar. The injection is preferably performed until the fluid adhesive 7 starts flowing out of the ventilation hole 5e, preferably free from air bubbles.

The fluid adhesive 7 may then harden in the sandwich component 1, i. e. in the repair cavity 3. This may e. g. be performed in a curing cycle at room temperature or using heat depending on respective underlying adhesive requirements. Such a curing cycle is preferably monitored and documented. Thus, the insert 5 is durably fixed to the dowel sleeve 4 and together with the latter to the honeycomb core 2 resp. the sandwich component 1.

Afterwards, any further processing may be performed as required. For instance, a non-destructive testing may be performed for checking whether bonding defects occur, a visual check and tapping test may be performed, a torque meter test may be performed, adhesive spots on bonding edges and surrounding area may be reworked as required and/or surface protection may be restored, etc. However, as such further processing is well-known to the person skilled in the art and not part of the present invention, a detailed description thereof is omitted for brevity and conciseness.

Figure 3 shows the sandwich component 1 of Figure 1 with the upper and lower cover plates 1b, 1d and the honeycomb core 2, for illustrating a variant of the method of repairing the sandwich component 1 according to Figure 2. As described above with reference to Figure 2, the upper and lower repair openings 3a, 3b and the repair cavity 3 are created, the dowel sleeve 4 and the insert 5 are introduced into the sandwich component 1, and the fluid adhesive 7 is introduced resp. injected into the dowel sleeve 4 and the repair cavity 3.

However, in contrast to Figure 2, the dowel sleeve 4 is now provided with at least one radially inwardly protruding flange and, illustratively, with a first resp. upper radially inwardly protruding flange 4b and a second resp. lower radially inwardly protruding flange 4c. In this case, at least the upper radially inwardly protruding flange 4b and, preferably, also the lower radially inwardly protruding flange 4c, is predefined such that the inner form-fit and/or press-fit connection between the dowel sleeve 4 and the insert 5 is created between the upper radially inwardly protruding flange 4b of the dowel sleeve 4 and the upper flange 5f of the insert 5, resp. between the lower radially inwardly protruding flange 4c of the dowel sleeve 4 and the lower flange 5g of the insert 5.

According to one aspect, at least the upper radially inwardly protruding flange 4b and, preferably, also the lower radially inwardly protruding flange 4c, exhibits a length 4i, i. e. a radial extension, that amounts at least to 5mm plus a respective wall thickness of the dowel sleeve 4. Preferably, at least the upper radially inwardly protruding flange 4b and, preferentially, also the lower radially inwardly protruding flange 4c, exhibits a thickness that may be selected from a range that extends from a respective thickness of the upper resp. lower cover plates 1b, 1d to the thickness of the upper resp. lower flanges 5f, 5g of the insert 5. Furthermore, the length 6a of the lateral under-cut areas 6 preferably amounts to half of the flange outer diameter 5j of the upper flange 5f of the insert 5.

Figure 4 shows the sandwich component 1 of Figure 1 with the upper and lower cover plates 1b, 1d and the honeycomb core 2, for illustrating another variant of the method of repairing the sandwich component 1 according to Figure 2. As described above with reference to Figure 2, the upper repair opening 3a and the repair cavity 3 are created, the dowel sleeve 4 and the insert 5 are introduced into the sandwich component 1, and the fluid adhesive 7 is introduced resp. injected into the dowel sleeve 4 and the repair cavity 3.

However, in contrast to Figure 2, creation of the repair opening 3b is omitted and the repair cavity 3 is only created in the form of a blind hole, such that a predetermined clearance 9 between the dowel sleeve 4, resp. the insert 5, and the lower cover plate 1d is provided. Creation of the repair cavity may now be performed with a maximum tolerance of +0.2mm. The predetermined clearance 9 preferably amounts at least to the flange outer diameter 5j of the upper flange 5f of the insert 5.

According to one aspect, the repair cavity 3 is at least created such that a predetermined adhesive height 7a, e. g. 2 to 3mm, of the fluid adhesive 7 can be achieved below the dowel sleeve 4 and the insert 5. However, it should be noted that the predetermined adhesive height 7a may also be made dependent on a respective viscosity of the fluid adhesive 7. In other words, the predetermined adhesive height 7a of e. g. 2 to 3mm may be obtained by using an adhesive with a comparatively low viscosity as the fluid adhesive 7, while the predetermined adhesive height 7a may also be reduced to approximately 0mm if an adhesive with a comparatively high viscosity is used as the fluid adhesive 7. Also, the fluid adhesive 7 may now at least partly be introduced resp. injected into the repair cavity 3 prior to introducing the dowel sleeve 4 and the insert 5, e. g. until the predetermined adhesive height 7a is reached.

It should be noted that due to an underlying shortening of the repair cavity 3 compared to Figure 2, the dowel sleeve 4 and the insert 5 are also shorter than in Figure 2 and, exemplarily, provided in the form of a blind hole dowel sleeve and a blind hole insert. In this case, the insert 5 may be provided with a different shaping than in Figure 2, e. g. according to DIN 65188, DIN 65308 etc.

Figure 5 shows the sandwich component 1 of Figure 1 with the upper and lower cover plates 1b, 1d and the honeycomb core 2, for illustrating a variant of the method of repairing the sandwich component 1 according to Figure 4. As described above with reference to Figure 4, the upper repair opening 3a and the repair cavity 3 are created, the dowel sleeve 4 and the insert 5 are introduced into the sandwich component 1, and the fluid adhesive 7 is introduced resp. injected into the dowel sleeve 4 and the repair cavity 3.

However, in contrast to Figure 4, the dowel sleeve 4 is now provided with at least one radially inwardly protruding flange and, illustratively, with a first or upper radially inwardly protruding flange 4b and a second or lower radially inwardly protruding flange 4c. The upper radially inwardly protruding flange 4b and the lower radially inwardly protruding flange 4c are preferably configured as described above with reference to Figure 3. Furthermore, the insert 5 may now be provided with a different shaping than in Figure 4, e. g. according to DIN 65191, etc.

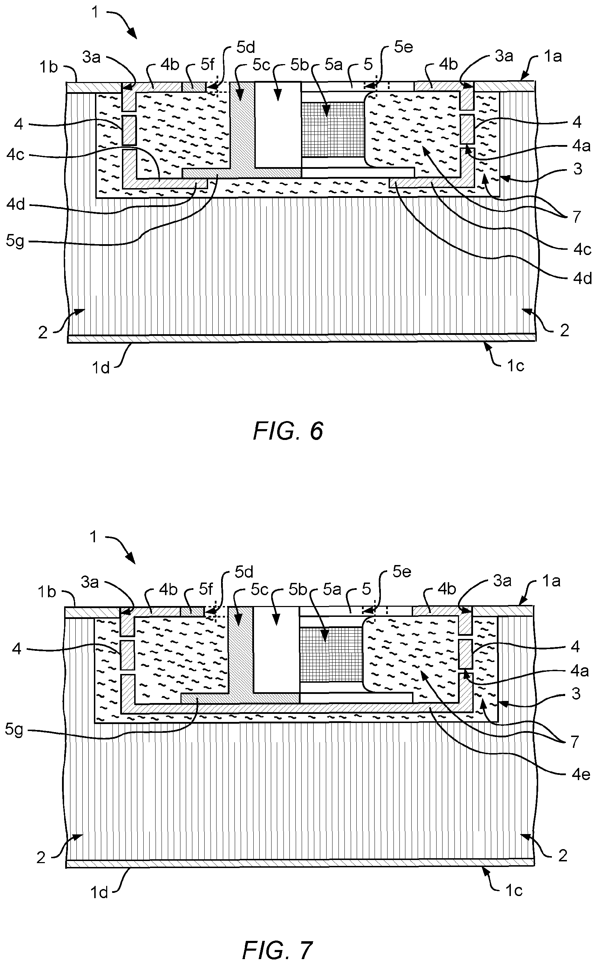

Figure 6 shows the sandwich component 1 of Figure 1 with the upper and lower cover plates 1b, 1d and the honeycomb core 2, for illustrating a variant of the method of repairing the sandwich component 1 according to Figure 5. As described above with reference to Figure 5, the upper repair opening 3a and the repair cavity 3 are created, the dowel sleeve 4 with the upper radially inwardly protruding flange 4b and the lower radially inwardly protruding flange 4c as well as the insert 5 are introduced into the sandwich component 1, and the fluid adhesive 7 is introduced resp. injected into the dowel sleeve 4 and the repair cavity 3.

However, in contrast to Figure 5, the lower radially inwardly protruding flange 4c now preferably comprises flange extensions 4d that are protruding radially inwardly. Thus, the insert 5 is now positioned above, i. e. on top of the lower radially inwardly protruding flange 4c.

Figure 7 shows the sandwich component 1 of Figure 1 with the upper and lower cover plates 1b, 1d and the honeycomb core 2, for illustrating another variant of the method of repairing the sandwich component 1 according to Figure 5. As described above with reference to Figure 5, the upper repair opening 3a and the repair cavity 3 are created, the dowel sleeve 4 and the insert 5 are introduced into the sandwich component 1, and the fluid adhesive 7 is introduced resp. injected into the dowel sleeve 4 and the repair cavity 3.

However, in contrast to Figure 5, the dowel sleeve 4 now preferably comprises a closed bottom portion 4e. Thus, the insert 5 is now positioned above, i. e. on top of the closed bottom portion 4e.

It should be noted that the configurations of Figure 6 and Figure 7 advantageously provide for a direct pressure transmission from the insert 5 into the dowel sleeve 4. Thus, comparatively high pressure loads can be transferred through the sandwich component 1.

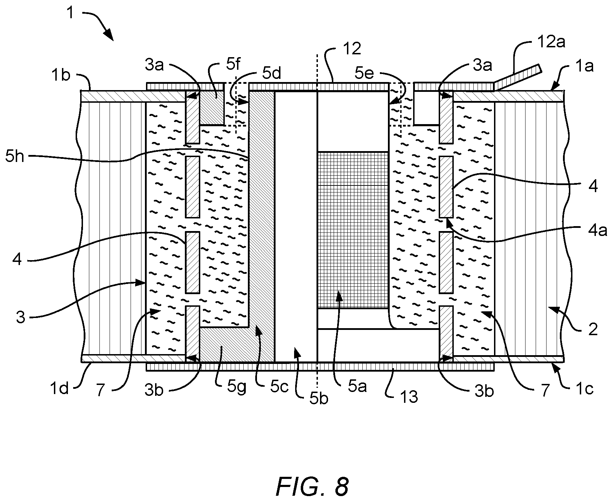

Figure 8 shows the sandwich component 1 of Figure 1 with the upper and lower cover plates 1b, 1d and the honeycomb core 2, for illustrating another variant of the method of repairing the sandwich component 1 according to Figure 3. As described above with reference to Figure 3, the upper and lower repair openings 3a, 3b and the repair cavity 3 are created, the dowel sleeve 4 and the insert 5 are introduced into the sandwich component 1, and the fluid adhesive 7 is introduced resp. injected into the dowel sleeve 4 and the repair cavity 3.

However, in contrast to Figure 3, preferably a fixation disc 12 is now attached to the upper cover plate 1b for fixing the dowel sleeve 4 in the sandwich component 1 at the upper cover plate 1b. This is preferentially performed prior to introducing the fluid adhesive 7 into the dowel sleeve 4 and the repair cavity 3. Preferably, the fixation disc 12 is perforated at respective locations of the potting hole 5d and the ventilation hole 5e.

Furthermore, a fixation tape 13 is now preferably attached to the lower cover plate 1d for fixing the dowel sleeve 4 in the sandwich component 1 at the lower cover plate 1d. This is Preferentially also performed prior to introducing the fluid adhesive 7 into the dowel sleeve 4 and the repair cavity 3.

It should be noted that attachment of the fixation tape 13 may be performed prior to attachment of the fixation disc 12. However, it may also be performed simultaneously or afterwards. Furthermore, attachment of the fixation tape 13 may be performed prior to introducing the dowel sleeve 4 and the insert 5 via the repair opening 3a into the sandwich component 1.

According to one aspect, the fixation disc 12 is provided with a pull-off tab 12a. The latter is preferentially adapted for simplifying removal of the fixation disc 12 after having finished to repair the sandwich component 1.

It should be noted that further modifications are within the common knowledge of the person skilled in the art. For instance, different aspects of the variants described above can readily be combined and are, thus, likewise contemplated. By way of example, in configurations with an upper repair opening and a lower repair opening, the dowel sleeve and the insert may be introduced through the upper or the lower repair opening. Moreover, the fixing disc of Figure 11 may be used in anyone of the configurations described above. This mutatis mutandis applies to the fixation tape, which may be used in anyone of the configurations, where a repair opening is provided in the lower cover plate, and so on.

### Reference List

- 1: sandwich component
- 1a: upper component side
- 1b: upper cover plate
- 1c: lower component side
- 1d: lower cover plate
- 1e: viewing direction
- 2: core element
- 3: repair cavity
- 3a: upper repair opening
- 3b: lower repair opening
- 3d: upper opening diameter
- 3e: lower opening diameter
- 3f: repair cavity height
- 3g: repair cavity diameter
- 4: dowel sleeve
- 4a: dowel sleeve peripheral openings
- 4b: dowel sleeve upper flange
- 4c: dowel sleeve lower flange
- 4d: lower flange extension
- 4e: closed bottom portion
- 4l: dowel outer diameter
- 5: standardized insert
- 5a: roughened outer profile
- 5b: inner through hole
- 5c: tubular wall
- 5d: insert potting hole
- 5e: insert ventilation hole
- 5f: upper insert flange
- 5g: lower insert flange
- 5h: insert column
- 5i: column outer diameter
- 5j: flange outer diameter
- 6: lateral under-cut areas
- 6a: lateral under-cut area length
- 7: fluid adhesive
- 7a,: adhesive heights
- 8a: outer free space
- 8b: inner free space
- 9: arrangement clearance
- 12: fixing disc
- 12a: pull-off tab
- 13: fixation tape.

## Claims

1. A method of repairing a sandwich component (1) having a core element (2) that is arranged between a first cover plate (1b) and a second cover plate (1d), the method comprising at least the steps of:
- Creating a repair opening (3a) in the first cover plate (1b), the repair opening (3a) having an associated opening diameter (3d),
- Creating a repair cavity (3) in the core element (2) in prolongation to the repair opening (3a), the repair cavity (3) having a cavity diameter (3g) that is greater than the associated opening diameter (3d) for providing lateral under-cut areas (6) that are covered by the first cover plate (1b),
- Introducing a dowel sleeve (4) that is provided with a plurality of peripheral openings (4a) through the repair opening (3a) into the repair cavity (3), the dowel sleeve (4) having an outer diameter (41) that equals at least approximately the associated opening diameter (3d), such that an outer form-fit and/or press-fit connection is created between the dowel sleeve (4) and the first cover plate (1b),
- Introducing an insert (5) into the dowel sleeve (4), such that an inner form-fit and/or press-fit connection is created between the insert (5) and the dowel sleeve (4), and
- Introducing a fluid adhesive (7) into the dowel sleeve (4) and the repair cavity (3), such that the lateral under-cut areas (6) and the plurality of peripheral openings (4a) are filled with the fluid adhesive (7).

2. The method of claim 1,
wherein the step of introducing the insert (5) into the dowel sleeve (4) is performed prior to the step of introducing the dowel sleeve (4) into the repair cavity (3).

3. The method of claim 1,
wherein the insert (5) comprises at least one flange (5f) having an outer diameter (5j) that is predefined such that the inner form-fit and/or press-fit connection is created between the at least one flange (5f) and the dowel sleeve (4).

4. The method of claim 3,
wherein the at least one flange (5f) is provided with a potting hole (5d) and a ventilation hole (5e), and wherein the step of introducing the fluid adhesive (7) into the dowel sleeve (4) and the repair cavity (3) comprises introducing the fluid adhesive (7) via the potting hole (5d) into the dowel sleeve (4).

5. The method of claim 4,
wherein the insert (5) comprises a column section (5h) that extends from the at least one flange (5f) into the dowel sleeve (4), the column section (5h) having an outer diameter (5i) that is smaller than the outer diameter (5j) of the at least one flange (5f), such that an inner free space (8b) is provided between the column section (5h) and the dowel sleeve (4), and wherein the step of introducing the fluid adhesive (7) into the dowel sleeve (4) and the repair cavity (3) comprises introducing the fluid adhesive (7) via the potting hole (5d) into the inner free space (8b), such that the fluid adhesive (7) flows from the inner free space (8b) via the plurality of peripheral openings (4a) into the lateral under-cut areas (6).

6. The method of claim 3,
wherein the dowel sleeve (4) comprises at least one radially inwardly protruding flange (4b) that is predefined such that the inner form-fit and/or press-fit connection is created between the at least one radially inwardly protruding flange (4b) of the dowel sleeve (4) and the at least one flange (5f) of the insert (5).

7. The method of claim 1,
further comprising the step of creating an additional repair opening (3b) in the second cover plate (1d), the additional repair opening (3b) having an associated opening diameter (3e) that corresponds to the associated opening diameter (3d) of the repair opening (3a), wherein the repair cavity (3) is created such that it extends from the repair opening (3a) to the additional repair opening (3b).

8. The method of claim 7,
wherein the step of introducing the dowel sleeve (4) through the repair opening (3a) into the repair cavity (3) comprises introducing the dowel sleeve (4) such that an additional outer form-fit and/or press-fit connection is created between the dowel sleeve (4) and the second cover plate (1d).

9. The method of claim 8,
further comprising the step of attaching, prior to introducing the fluid adhesive (7), a fixation disc (12) to the first cover plate (1b) for fixing the dowel sleeve (4) in the sandwich component (1) at the first cover plate (1b).

10. The method of claim 9,
further comprising the step of attaching, prior to introducing the fluid adhesive (7), a fixation tape (13) to the second cover plate (1d) for fixing the dowel sleeve (4) in the sandwich component (1) at the second cover plate (1d).

## Patentansprüche

1. Verfahren zum Reparieren eines Sandwichbauteils (1) mit einem Kernelement (2), das zwischen einer ersten Deckplatte (1b) und einer zweiten Deckplatte (1d) angeordnet ist, wobei das Verfahren mindestens die folgenden Schritte umfasst:
- Erzeugen einer Reparaturöffnung (3a) in der ersten Deckplatte (1b), wobei die Reparaturöffnung (3a) einen zugeordneten Öffnungsdurchmesser (3d) aufweist,
- Erzeugen eines Reparaturhohlraums (3) in dem Kernelement (2) in Verlängerung der Reparaturöffnung (3a), wobei der Reparaturhohlraum (3) einen Hohlraumdurchmesser (3g) aufweist, der größer ist als der zugeordnete Öffnungsdurchmesser (3d), um seitliche Hinterschneidungsbereiche (6) zu schaffen, die von der ersten Abdeckplatte (1b) abgedeckt sind,
- Einführen einer mit einer Mehrzahl von Umfangsöffnungen (4a) versehenen Dübelhülse (4) durch die Reparaturöffnung (3a) in den Reparaturhohlraum (3), wobei die Dübelhülse (4) einen Außendurchmesser (41) aufweist, der zumindest annähernd dem zugeordneten Öffnungsdurchmesser (3d) entspricht, so dass eine äußere Formschluss- und/oder Presspassungsverbindung zwischen der Dübelhülse (4) und der ersten Abdeckplatte (1b) geschaffen wird,
- Einführen eines Einsatzes (5) in die Dübelhülse (4), so dass eine innere Formschluss- und/oder Presspassungsverbindung zwischen dem Einsatz (5) und der Dübelhülse (4) geschaffen wird, und
- Einführen eines flüssigen Klebstoffs (7) in die Dübelhülse (4) und den Reparaturhohlraum (3), so dass die seitlichen Hinterschneidungsbereiche (6) und die Mehrzahl der Umfangsöffnungen (4a) mit dem flüssigen Klebstoff (7) gefüllt werden.

2. Verfahren nach Anspruch 1,
bei dem der Schritt des Einführens des Einsatzes (5) in die Dübelhülse (4) vor dem Schritt des Einführens der Dübelhülse (4) in den Reparaturhohlraum (3) durchgeführt wird.

3. Verfahren nach Anspruch 1,
bei dem der Einsatz (5) mindestens einen Flansch (5f) mit einem Außendurchmesser (5j) umfasst, der so vorgegeben ist, dass die innere Formschluss- und/oder Presspassungsverbindung zwischen dem mindestens einen Flansch (5f) und der Dübelhülse (4) hergestellt wird.

4. Verfahren nach Anspruch 3,
bei dem der mindestens eine Flansch (5f) mit einem Vergussloch (5d) und einem Belüftungsloch (5e) versehen ist, und bei dem der Schritt des Einführens des flüssigen Klebers (7) in die Dübelhülse (4) und den Reparaturhohlraum (3) das Einführen des flüssigen Klebers (7) in die Dübelhülse (4) über das Vergussloch (5d) umfasst.

5. Verfahren nach Anspruch 4,
bei dem der Einsatz (5) einen Säulenabschnitt (5h) umfasst, der sich von dem mindestens einen Flansch (5f) in die Dübelhülse (4) erstreckt, der Säulenabschnitt (5h) einen Außendurchmesser (5i) aufweist, der kleiner ist als der Außendurchmesser (5j) des mindestens einen Flansches (5f), so dass zwischen dem Säulenabschnitt (5h) und der Dübelhülse (4) ein innerer Freiraum (8b) geschaffen wird, und der Schritt des Einführens des flüssigen Klebstoffs (7) in die Dübelhülse (4) und den Reparaturhohlraum (3) das Einführen des flüssigen Klebstoffs (7) über das Vergussloch (5d) in den inneren Freiraum (8b) umfasst, so dass der flüssige Klebstoff (7) aus dem inneren Freiraum (8b) über die Mehrzahl von Umfangsöffnungen (4a) in die seitlichen Hinterschneidungsbereiche (6) fließt.

6. Verfahren nach Anspruch 3,
bei dem die Dübelhülse (4) mindestens einen radial nach innen vorstehenden Flansch (4b) umfasst, der so vorgegeben ist, dass die innere Formschluss- und/oder Presspassungsverbindung zwischen dem mindestens einen radial nach innen vorstehenden Flansch (4b) der Dübelhülse (4) und dem mindestens einen Flansch (5f) des Einsatzes (5) hergestellt wird.

7. Verfahren nach Anspruch 1,
das ferner den Schritt des Erzeugens einer zusätzlichen Reparaturöffnung (3b) in der zweiten Abdeckplatte (1d) umfasst, wobei die zusätzliche Reparaturöffnung (3b) einen zugeordneten Öffnungsdurchmesser (3e) aufweist, der dem zugeordneten Öffnungsdurchmesser (3d) der Reparaturöffnung (3a) entspricht, wobei der Reparaturhohlraum (3) so erzeugt wird, dass er sich von der Reparaturöffnung (3a) zu der zusätzlichen Reparaturöffnung (3b) erstreckt.

8. Verfahren nach Anspruch 7,
bei dem der Schritt des Einführens der Dübelhülse (4) durch die Reparaturöffnung (3a) in den Reparaturhohlraum (3) das Einführen der Dübelhülse (4) derart umfasst, dass eine zusätzliche äußere Formschluss- und/oder Presspassungsverbindung zwischen der Dübelhülse (4) und der zweiten Deckplatte (1d) hergestellt wird.

9. Verfahren nach Anspruch 8,
das ferner vor dem Einführen des flüssigen Klebstoffs (7) den Schritt des Anbringens einer Befestigungsscheibe (12) an der ersten Deckplatte (1b) zum Befestigen der Dübelhülse (4) im Sandwichbauteil (1) an der ersten Deckplatte (1b) umfasst.

10. Verfahren nach Anspruch 9,
das ferner vor dem Einführen des flüssigen Klebstoffs (7) den Schritt des Anbringens eines Fixierbands (13) an der zweiten Deckplatte (1d) zum Befestigen der Dübelhülse (4) im Sandwichbauteil (1) an der zweiten Deckplatte (1d) umfasst.

## Revendications

1. Procédé de réparation d'un composant sandwich (1) ayant un élément de noyau (2) qui est agencé entre une première feuille de couverture (1b) et une seconde feuille de couverture (1d), le procédé comprenant au moins les étapes de :
- Réalisation d'une ouverture de réparation (3a) dans la première feuille de couverture (1b), l'ouverture de réparation (3a) ayant un diamètre d'ouverture (3d) associé,
- Réalisation d'une cavité de réparation (3) dans l'élément de noyau (2) dans le prolongement de l'ouverture de réparation (3a), la cavité de réparation (3) ayant un diamètre de cavité (3g) supérieur au diamètre d'ouverture (3d) associé afin d'apporter des zones de dégagement latérales (6) qui sont couvertes par la première feuille de couverture (1b),
- Introduction d'un manchon de positionnement (4) qui est prévu avec une pluralité d'ouvertures périphériques (4a) par l'ouverture de réparation (3a) à l'intérieur de la cavité de réparation (3), le manchon de positionnement (4) ayant un diamètre extérieur (4l) qui est au moins approximativement égal au diamètre d'ouverture (3d) associé, de façon qu'une liaison extérieure adaptée à la forme et/ou ajustée à la presse soit réalisée entre le manchon de positionnement (4) et la première feuille de couverture (1b),
- Introduction d'un insert (5) à l'intérieur du manchon de positionnement (4), de façon qu'une liaison intérieure adaptée à la forme et/ou ajustée à la presse soit réalisée entre l'insert (5) et le manchon de positionnement (4), et
- Introduction d'un adhésif fluide (7) à l'intérieur du manchon de positionnement (4) et de la cavité de réparation (3), de façon que les zones de dégagement latérales (6) et la pluralité d'ouvertures périphériques (4a) soient remplies par l'adhésif fluide (7).

2. Procédé selon la revendication 1,
dans lequel l'étape d'introduction de l'insert (5) à l'intérieur du manchon de positionnement (4) est accomplie avant l'étape d'introduction du manchon de positionnement (4) à l'intérieur de la cavité de réparation (3).

3. Procédé selon la revendication 1,
dans lequel l'insert (5) comprend au moins une collerette (5f) ayant un diamètre extérieur (5j) prédéfini de façon que la liaison intérieure adaptée à la forme et/ou ajustée à la presse soit réalisée entre ladite au moins une collerette (5f) et le manchon de positionnement (4).

4. Procédé selon la revendication 3,
dans lequel ladite au moins une collerette (5f) est prévue avec un orifice de remplissage (5d) et un orifice de ventilation (5e), et dans lequel l'étape d'introduction de l'adhésif fluide (7) à l'intérieur du manchon de positionnement (4) et de la cavité de réparation (3) comprend l'introduction de l'adhésif fluide (7) à l'intérieur du manchon de positionnement (4) via l'orifice de remplissage (5d).

5. Procédé selon la revendication 4,
dans lequel l'insert (5) comprend une section en colonne (5h) qui s'étend depuis ladite au moins une collerette (5f) dans le manchon de positionnement (4), la section en colonne (5h) ayant un diamètre extérieur (5i) inférieur au diamètre extérieur (5j) de ladite au moins une collerette (5f), de façon qu'un espace intérieur libre (8b) soit aménagé entre la section en colonne (5h) et le manchon de positionnement (4), et dans lequel l'étape d'introduction de l'adhésif fluide (7) à l'intérieur du manchon de positionnement (4) et de la cavité de réparation (3) comprend l'introduction de l'adhésif fluide (7) à l'intérieur de l'espace intérieur libre (8b) via l'orifice de remplissage (5d), de sorte que l'adhésif fluide (7) s'écoule depuis l'espace intérieur libre (8b) à l'intérieur des zones de dégagement latérales (6) via la pluralité d'ouvertures périphériques (4a).

6. Procédé selon la revendication 3,
dans lequel le manchon de positionnement (4) comprend au moins une collerette radiale faisant saillie vers l'intérieur (4b) prédéfinie de sorte que la liaison intérieure adaptée à la forme et/ou ajustée à la presse soit réalisée entre ladite au moins une collerette radiale faisant saillie vers l'intérieur (4b) du manchon de positionnement (4) et ladite au moins une collerette (5f) de l'insert (5).

7. Procédé selon la revendication 1,
comprenant en outre l'étape de réalisation d'une ouverture de réparation supplémentaire (3b) dans la seconde feuille de couverture (1d), l'ouverture de réparation supplémentaire (3b) ayant un diamètre d'ouverture (3e) associé qui correspond au diamètre d'ouverture (3d) associé de l'ouverture de réparation (3a), dans lequel la cavité de réparation (3) est réalisée de façon qu'elle s'étende depuis l'ouverture de réparation (3a) jusqu'à l'ouverture de réparation supplémentaire (3b).

8. Procédé selon la revendication 7,
dans lequel l'étape d'introduction du manchon de positionnement (4) par l'ouverture de réparation (3a) à l'intérieur de la cavité de réparation (3) comprend l'introduction du manchon de positionnement (4) de façon qu'une liaison extérieure adaptée à la forme et/ou ajustée à la presse supplémentaire soit réalisée entre le manchon de positionnement (4) et la seconde feuille de couverture (1d).

9. Procédé selon la revendication 8,
comprenant en outre l'étape de fixation, avant d'introduire l'adhésif fluide (7), d'un disque de fixation (12) sur la première feuille de couverture (1b) pour fixer le manchon de positionnement (4) dans le composant sandwich (1) à l'emplacement de la première feuille de couverture (1b).

10. Procédé selon la revendication 9,
comprenant en outre l'étape de fixation, avant d'introduire l'adhésif fluide (7), d'une bande de fixation (13) sur la seconde feuille de couverture (1d) pour fixer le manchon de positionnement (4) dans le composant sandwich (1) à l'emplacement de la seconde feuille de couverture (1d).
